# EUROPEAN PATENT APPLICATION

(11) **EP 4 606 556 A1**
(43) Date of publication of application: **27.08.2025**
(21) Application number: 23879812.8
(22) Date of filing: 18.10.2023
(51) Int. Cl.: B29C 49/78, G05D 3/00

(54) **ROTATION TRANSFER DEVICE, CONTROL METHOD, AND PROGRAM**

(30) Priority: 18.10.2022 JP 2022166737
(71) Applicant: Nissei ASB Machine Co., Ltd., Komoro-shi, Nagano 384-8585 (JP)
(72) Inventor: KURANE, Yukio, Komoro-shi, Nagano 384-8585 (JP)
(74) Representative: Mewburn Ellis LLP
(86) International application number: PCT/JP2023/037637
(87) International publication number: WO 2024/085169

(57) **Abstract**

A rotary conveyance device includes: a conveyance body that rotationally conveys a workpiece between a plurality of stations by moving in a rotation direction; a positioning unit that engages with the conveyance body at a stop position corresponding to the station and restrains the conveyance body in a horizontal direction; a motor that drives the conveyance body in the rotation direction; a drive mechanism that transmits power of the motor to the conveyance body; and a control unit that controls the positioning unit and the motor. The control unit detects a first stop position of the conveyance body stopped by the control of the motor and a second stop position of the conveyance body after the positioning unit engages with the conveyance body, and corrects a next movement amount of the conveyance body based on a difference between the second stop position and the first stop position.

## Description

### Technical Field

The present invention relates to a rotary conveyance device, a control method, and a program.

### Background Art

Conventionally, there has been known a processing apparatus that conveys a workpiece between a plurality of processes by a rotation operation of a transfer plate and processes the workpiece. Examples of this type of processing apparatus include an injection molding apparatus that injection-molds a resin preform, and a blow molding device that blow-molds a container from the resin preform.

In this type of processing apparatus, the transfer plate that conveys the workpiece is positioned at a predetermined position in each process, and is restrained so as not to move during processing. For example, Patent Literature 1 discloses a blow molding apparatus that inserts a lock pin into a turntable at a predetermined stop position to restrain movement of the turntable in a rotation direction.

### Citation List

### Patent Literature

Patent Literature 1: JP 3200181 B

### Summary of Invention

### Technical Problem

When a positioning pin and a receiving hole formed in the transfer plate are misaligned in a state where the transfer plate is stopped at a predetermined position, the positioning pin interferes with the transfer plate and abrasion of the receiving hole may occur. When the abrasion of the receiving hole occurs, it becomes difficult to position the transfer plate at an accurate stop position, so that replacement or repair of the transfer plate is required.

Further, the position adjustment of the positioning pin and the receiving hole of the transfer plate is affected by, for example, a weight of the mold or the workpiece to be conveyed by the transfer plate, a conveyance speed of the transfer plate, and the like. For example, when a worker performs the position adjustment of the positioning pin and the receiving hole of the transfer plate, the worker needs to perform the position adjustment when a product to be processed is switched or every time setting of a processing condition is changed, and the work is very complicated. Furthermore, in the case of the position adjustment by the worker, there is a possibility that positioning accuracy of the positioning pin and the transfer plate cannot be sufficiently secured.

Therefore, the present invention has been made in view of such a problem, and an object of the present invention is to provide a rotary conveyance device capable of accurately and easily performing position adjustment of a conveyance body of a workpiece and a positioning unit.

### Solution to Problem

A rotary conveyance device according to one aspect of the present invention includes: a conveyance body that rotationally conveys a workpiece between a plurality of stations by moving in a rotation direction; a positioning unit that engages with the conveyance body at a stop position corresponding to the station and restrains the conveyance body in a horizontal direction; a motor that drives the conveyance body in the rotation direction; a drive mechanism that transmits power of the motor to the conveyance body; and a control unit that controls the positioning unit and the motor. The control unit detects a first stop position of the conveyance body stopped by the control of the motor and a second stop position of the conveyance body after the positioning unit engages with the conveyance body, and corrects a next movement amount of the conveyance body based on a difference between the second stop position and the first stop position.

### Advantageous Effects of Invention

According to one aspect of the present invention, it is possible to provide a rotary conveyance device capable of accurately and easily performing position adjustment of a conveyance body of a workpiece and a positioning unit.

### Brief Description of Drawings

Fig. 1 is a diagram illustrating a configuration example of a blow molding apparatus according to the present embodiment.
Fig. 2 is a diagram illustrating a configuration example of a rotary conveyance device.
Fig. 3 is a diagram illustrating a configuration example of a control unit of the blow molding apparatus.
Fig. 4 is a flowchart illustrating steps of a method for manufacturing a container.
Fig. 5(a) is a diagram illustrating a positional relationship between a second gear and a first gear during movement of a transfer plate, and Fig. 5(b) is a diagram illustrating a state of a positioning pin in Fig. 5(a).
Fig. 6(a) is a diagram illustrating a positional relationship between the second gear and the first gear when the control unit instructs to stop a motor, and Fig. 6(b) is a diagram illustrating a state of the positioning pin in Fig. 6(a).
Fig. 7(a) is a subsequent diagram of Fig. 6(a), and Fig. 7(b) is a diagram illustrating a state of the positioning pin in Fig. 7(a).
Fig. 8(a) is a subsequent diagram of Fig. 7(a), and Fig. 8(b) is a diagram illustrating a state of the positioning pin in Fig. 8(a).
Fig. 9(a) is a subsequent diagram of Fig. 8(a), and Fig. 9(b) is a diagram illustrating a state of the positioning pin in Fig. 9(a).
Fig. 10 is a diagram illustrating a case where the transfer plate moves in a reverse direction when the transfer plate and the positioning pin interfere with each other.
Fig. 11 is a diagram illustrating a determination example of a movement direction of the transfer plate by an abutting stop operation.
Fig. 12 is a diagram illustrating a determination example of the movement direction of the transfer plate by the abutting stop operation.
Fig. 13 is a diagram illustrating an operation example of calibration processing.
Fig. 14 is a flowchart illustrating a control example of a conveyance operation of the transfer plate.

### Description of Embodiments

Hereinafter, an embodiment of the present invention will be described with reference to the drawings.

In the embodiment, for easy understanding, structures and elements other than a main part of the present invention will be described in a simplified or omitted manner. In the drawings, the same elements are denoted by the same reference numerals. Note that shapes, dimensions, and the like of respective elements illustrated in the drawings are schematically illustrated, and do not indicate actual shapes, dimensions, and the like.

In the present embodiment, a configuration example of a blow molding apparatus that manufactures a container by injection-molding a resin preform and blow-molding the preform as an example of a processing apparatus (molding apparatus) including a rotary conveyance device will be described. The blow molding apparatus according to the present embodiment adopts a hot parison system (also referred to as a one-stage system) in which a container is blow-molded by utilizing a residual heat (internal heat quantity) from injection molding without cooling a preform to a room temperature. As will be described later, the rotary conveyance device may be applied to an injection molding apparatus as long as a configuration where a processed product (molded product) is held on a transfer plate and is intermittently rotationally conveyed between processes (between molding units) is used.

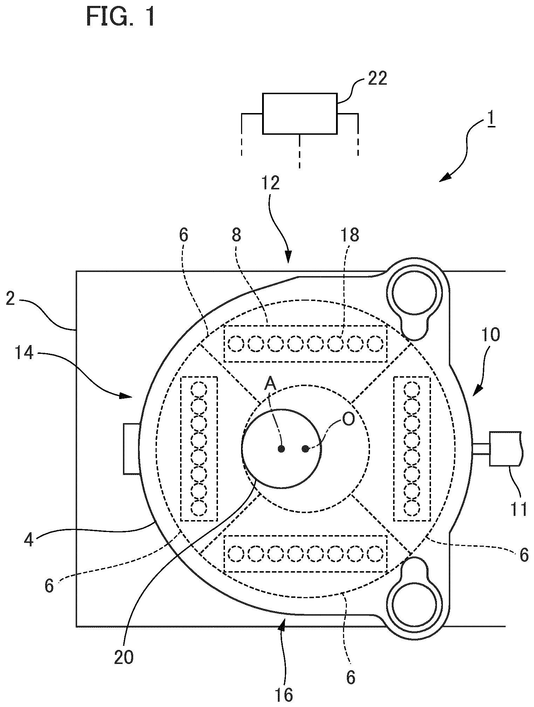

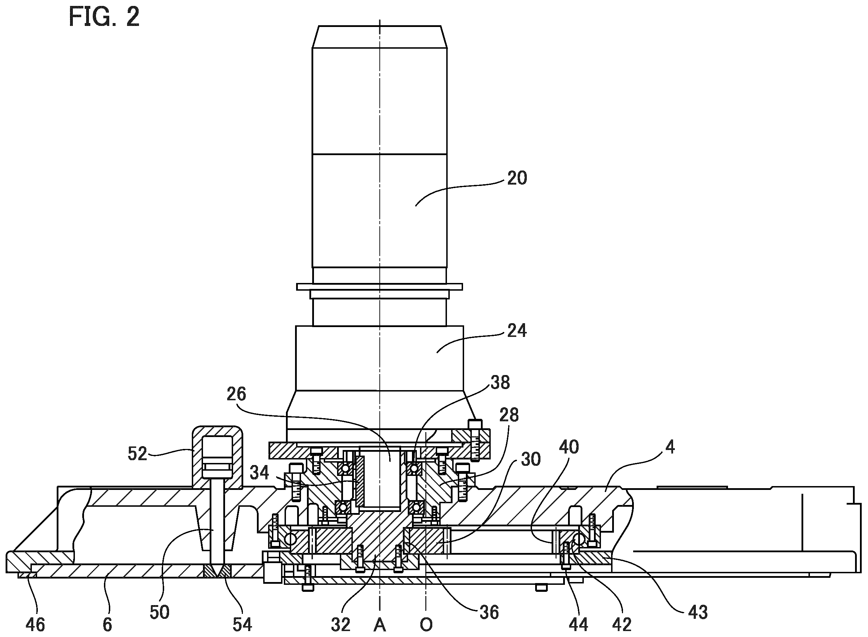

Fig. 1 is a diagram illustrating a configuration example of a blow molding apparatus according to the present embodiment. Fig. 2 is a diagram illustrating a configuration example of a rotary conveyance device included in the blow molding apparatus.

A blow molding apparatus 1 includes a machine base 2, an upper base 4, an injection molding unit 10, a temperature adjustment unit 12, a blow molding unit 14, a taking-out unit 16, and a control unit 22 that controls each unit of the blow molding apparatus 1. The upper base 3 is supported by a plurality of rod-shaped members (not illustrated) erected on the machine base 2, and is fixed above the machine base 2.

In the blow molding apparatus 1, the injection molding unit 10, the temperature adjustment unit 12, the blow molding unit 14, and the taking-out unit 16 are disposed in a space between the machine base 2 and the upper base 4. The injection molding unit 10, the temperature adjustment unit 12, the blow molding unit 14, and the taking-out unit 16 are disposed at positions rotated by a predetermined angle (for example, 90 degrees) with respect to a rotation center O in a direction perpendicular to a paper surface of Fig. 1.

The injection molding unit 10 includes an injection cavity mold and an injection core mold (not illustrated), and an injection device 11 that supplies a resin material, which is a raw material of a preform. The injection molding unit 10 closes these molds and a neck mold described later to form a preform-shaped mold space, and injects the resin material from the injection device 11 into the mold space to manufacture a bottomed cylindrical preform. Note that the preform is an example of a workpiece.

The temperature adjustment unit 12 includes a mold unit (temperature adjustment pot or temperature adjustment rod) for temperature adjustment (not illustrated). The temperature adjustment unit 12 performs temperature equalization and temperature deviation elimination of the preform manufactured by the injection molding unit 10 using the temperature adjustment pot, and adjusts the temperature of the preform to a blow temperature (for example, about 90°C to 105°C) suitable for final blow.

The blow molding unit 14 includes a blow molding mold, a blow-air introduction member, and a stretching rod (none of which are not illustrated). The blow molding unit 14 stretches a preform that is disposed in a blow molding mold and has a residual heat from injection molding, in an axial direction with the stretching rod, and performs biaxial stretching blow molding by introducing highpressure air (blow air) into the preform to manufacture a container.

The taking-out unit 16 opens a neck mold 18 to be described later by a taking-out cam (not illustrated), and takes-out the container manufactured by the blow molding unit 14 from the blow molding apparatus 1. The container taken-out by the taking-out unit 16 is boxed or conveyed to a filling line.

An upper mold clamping plate and an injection core mold (none of which are not illustrated) of the injection molding unit 10 are disposed on the top surface side at the position of the injection molding unit 10 of the upper base 4. At the position of the temperature adjustment unit 12 of the upper base 4, for example, a temperature adjustment rod and a lifting and lowering mechanism of the temperature adjustment rod (none of which are not illustrated) are disposed on the top surface side. At the position of the blow molding unit 14 of the upper base 4, a stretching rod, a blow air introduction member, and a lifting and lowering mechanism (none of which are illustrated) thereof are disposed on the top surface side. A taking-out cam (not illustrated) is disposed at the position of the taking-out unit 16 of the upper base 4.

The upper base 4 supports a transfer plate 6 that intermittently rotates and a motor 20 that drives the transfer plate 6. The transfer plate 6 is an example of a conveyance body. Although not illustrated, the blow molding apparatus 1 further includes a lifting and lowering mechanism (vertical mold opening/closing mechanism) that moves up and down the transfer plate 6 to perform operations related to mold closing and mold opening (releasing) between the machine base 2 and the upper base 4 or between the transfer plate 6 and the machine base 2.

The transfer plate 6 has a substantially fan shape or a single disk shape as a whole, and is rotatably disposed on a bottom surface of the upper base 4. In addition, a plurality of transfer plates 6 are arranged in a case of a substantially fan shape (for example, in a case where there are four molding stations, there are four quadrant-shaped transfer plates 6), and one transfer plate 6 is arranged in a case of a disk shape. On a bottom surface of each transfer plate 6, a holding plate (a pair of dividing plates) 8 that supports a plurality of (for example, 8) neck molds 18 which are split molds in an openable and closable manner is arranged. The plurality of transfer plates 6 or the single transfer plate 6 is guided by a guide member 46 described later provided on the upper base 4, and intermittently moves by a predetermined angle (for example, 90 degrees) in a rotation direction (forward direction) with the rotation center O as a rotation shaft. The preform (or container) held by the neck mold 18 of the transfer plate 6 is conveyed through the injection molding unit 10, the temperature adjustment unit 12, the blow molding unit 14, and the taking-out unit 16 in this order by the movement of the transfer plate 6.

The motor 20 is, for example, a pulse motor or a servomotor, and a rotation amount and a torque are controlled by the control unit 22 via a conveyance drive unit 65 to be described later. As illustrated in Fig. 2, a rotation shaft A of the motor 20 is disposed at a position eccentric to the rotation center O of the transfer plate 6, and is connected to a speed reducer 24 that reduces the output of the motor 20 at a predetermined speed reduction ratio. The speed reducer 24 is fixed to the upper base 4 with bolts via a speed reducer fixing plate 28, whereby the motor 20 and the speed reducer 24 are attached to the top surface of the upper base 4.

A gear fixing metal fitting 32 is fixed to an output shaft 26 of the speed reducer 24 via a first key 34. A second gear 30 is fixed to the gear fixing metal fitting 32 via a second key 36. The gear fixing metal fitting 32 is rotatably supported with respect to the speed reducer fixing plate 28 via a first bearing 38. As a result, the second gear 30 rotates with the rotation of the output shaft 26.

On the other hand, the transfer plate 6 is provided with a first gear 40 having internal teeth that mesh with the second gear 30. The first gear 40 is fixed to an intermediate member 43 connected to the transfer plate 6 via a bolt 44, and is rotatably supported with respect to the upper base 4 via a second bearing 42. A guide member 46 that supports a bottom surface of a peripheral portion of the transfer plate 6 is provided on an outer edge portion of the upper base 4. Note that the output of the speed reducer 24 is further decelerated by the first gear 40 and the second gear 30. The first gear 40 and the second gear 30 are an example of a drive mechanism.

The upper base 4 is provided with an air cylinder 52 that moves a positioning pin 50 forward and backward in an up-and-down direction (vertical direction). On the other hand, a receiving hole 54 for receiving the positioning pin 50 is formed in the transfer plate 6. The positioning pin 50 is inserted into the receiving hole 54 of the transfer plate 6 when a holding plate 8 supporting the neck mold 18 is at a stop position facing each station. By the engagement of the positioning pin 50 and the receiving hole 54, the transfer plate 6 is positioned and the movement in the rotation direction is restrained.

Note that the positioning pin 50 and the air cylinder 52 may be disposed at the stop position of each station, or may be disposed at the stop position of any one or more of the four stations.

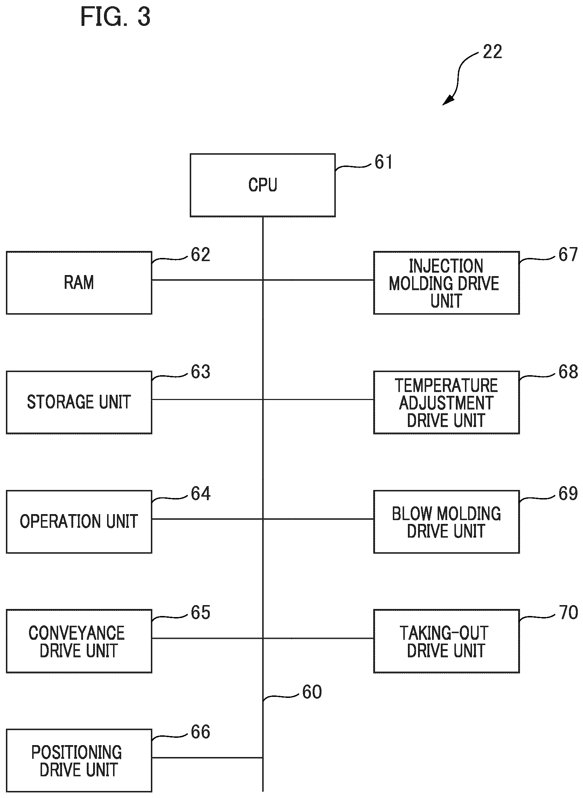

Fig. 3 is a diagram illustrating a configuration example of the control unit 22 of the blow molding apparatus 1. The control unit 22 includes a central processing unit (CPU) 61, a random access memory (RAM) 62, a storage unit 63, an operation unit 64, a conveyance drive unit 65, a positioning drive unit 66, an injection molding drive unit 67, a temperature adjustment drive unit 68, a blow molding drive unit 69, and a taking-out drive unit 70. The respective elements of the control unit 22 are connected to each other via a bus 60.

The CPU 61 is a processor that executes a program stored in the storage unit 63 and comprehensively controls each unit of the blow molding apparatus 1. The RAM 62 is a memory that functions as a main memory, a work area, or the like of the CPU 61. The storage unit 63 includes, for example, a hard disk, a solid state drive, or the like, and stores programs and various data.

The operation unit 64 is a module that receives inputs (for example, the conveyance speed of the transfer plate 6 is changed) of operation conditions of various actuators in the blow molding apparatus 1 and processing conditions (molding conditions) of the preform/container from an operator. The operation unit 64 includes, for example, an operation panel including a plurality of input buttons, a touch panel device having a screen display function in which a light transmitting touch panel is stacked on a liquid crystal screen, or the like.

The conveyance drive unit 65 is a driver and an interface for controlling the rotation amount and the torque of the motor 20. The conveyance drive unit 65 detects the rotation amount of the motor 20 from an encoder (not illustrated) attached to the rotation shaft A of the motor 20. The positioning drive unit 66 is a driver and an interface for controlling the air cylinder 52 that moves the positioning pin 50 forward and backward.

The injection molding drive unit 67 is a driver and an interface for executing injection control of the injection device 11 in the injection molding unit 10, mold opening/closing control of the injection cavity mold and the injection core mold, and the like. The temperature adjustment drive unit 68 is a driver and an interface for executing temperature control of the mold unit in the temperature adjustment unit 12, mold opening/closing control of the mold unit, and the like.

The blow molding drive unit 69 is a driver and an interface for executing mold opening/closing control of a blow molding mold in the blow molding unit 14, vertical axis stretching control by a stretching rod, flow rate control of compressed air, and the like. The taking-out drive unit 70 is a driver and an interface for executing mold opening control of the neck mold 18 in the taking-out unit 16 and the like.

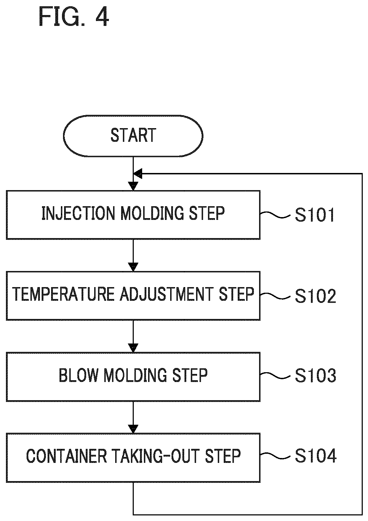

Next, a method for manufacturing a container by the blow molding device 1 of the present embodiment will be briefly described. Fig. 4 is a flowchart illustrating steps of the container manufacturing method.

### (Step S101: injection molding step)

In step S1, in the injection molding unit 10, the resin is injected from the injection device 11 into a preform-shaped mold space formed by the injection cavity mold, the injection core mold, and the neck mold 18 to manufacture a preform.

Then, the injection cavity mold and the injection core mold are opened, and the preform having a residual heat from injection molding is released from the mold. Then, the transfer plate 6 moves so as to rotate by a predetermined angle, and the preform held in the neck mold 18 is conveyed to the temperature adjustment unit 12.

### (Step S102: temperature adjustment step)

Next, in the temperature adjustment unit 12, the preform is accommodated in a temperature adjustment pot adjusted to a predetermined temperature, and a temperature adjustment rod adjusted to a predetermined temperature is inserted into the preform. As a result, temperature adjustment for bringing the temperature of the preform close to a temperature suitable for final blow and reduction of the temperature deviation generated during injection molding are performed.

Then, the mold unit of the temperature adjustment unit 12 is opened, and the preform after the temperature adjustment is released from the mold. Then, the transfer plate 6 moves so as to rotate by a predetermined angle, and the preform held by the neck mold 18 is conveyed to the blow molding unit 14.

### (Step S103: blow molding step)

Subsequently, blow molding of the container is performed in the blow molding unit 14.

First, when the preform is accommodated in the blow molding mold of the blow molding unit 14, the blow molding mold is closed, and a mold space corresponding to the shape of the container is formed. Subsequently, the blow air introduction member and the stretching rod are inserted into the preform, and the preform is stretched in the axial direction by lowering of the stretching rod. Then, the blow air is introduced into the preform from the blow air introduction member. As a result, the preform bulges so as to be in close contact with the blow molding mold and is blow-molded in the container.

### (Step S104: container taking-out step)

When the blow molding is completed, the blow molding mold is opened. Subsequently, the transfer plate 6 moves so as to rotate by a predetermined angle, and the container is conveyed to the taking-out unit 16. In the taking-out unit 16, a neck portion of the container is released from the neck mold 18, and the container is extracted to the outside of the blow molding apparatus 1.

In this way, one cycle in the container manufacturing method ends. Then, the transfer plate moves so as to rotate by a predetermined angle, and the respective steps of S101 to S104 described above are repeated. During the operation of the blow molding apparatus 1, manufacturing of four sets of containers having a time difference of one step is performed in parallel.

Further, due to the structure of the blow molding apparatus 1, the injection molding step, the temperature adjustment step, the blow molding step, and the container taking-out step have the same time length. Similarly, the conveyance time between the respective steps also have the same length.

Next, the conveyance operation of the transfer plate 6 in the present embodiment will be described. In the blow molding apparatus 1 of the present embodiment, under the control of the control unit 22, the transfer plate 6 moves intermittently in the rotation direction as described above, and the holding plate 8 stops at each stop position facing each station. In the following description, a rotation direction in which the transfer plate 6 moves in the order of the injection molding unit 10, the temperature adjustment unit 12, the blow molding unit 14, and the taking-out unit 16 is also referred to as a forward direction, and an opposite rotation direction thereof is also referred to as a reverse direction. Note that the forward direction is an example of the conveyance direction.

When the transfer plate 6 is at the stop position, the positioning pin 50 is lowered and inserted into the receiving hole 54 of the transfer plate 6 by driving the air cylinder 52. Then, the positioning pin 50 engages with the receiving hole 54, the transfer plate 6 is positioned at the stop position, and the movement in the rotation direction is restrained. Then, when the positioning pin 50 is raised by the driving of the air cylinder 52 and retreated from the transfer plate 6, the engagement between the receiving hole 54 and the positioning pin 50 is released, and the transfer plate 6 can move in the forward direction again. The operation of the air cylinder 52 is performed every time the transfer plate 6 moves under the control of the control unit 22.

At the time of inserting the positioning pin 50 into the receiving hole 54 of the transfer plate 6, if the transfer plate 6 is shifted from the stop position, the positioning pin 50 interferes with the transfer plate 6 (outer edge portion of the receiving hole 54). When the positioning pin 50 interferes with the transfer plate 6 each time the transfer plate 6 stops, the receiving hole 54 wears and the shape becomes large, so that it becomes difficult to position the transfer plate 6 at an accurate stop position. In addition, abrasion powder due to abrasion of the receiving hole 54 may be mixed into the processed product.

Therefore, the control unit 22 of the present embodiment executes the position adjustment operation of the receiving hole 54 of the transfer plate 6 and the positioning pin 50 as follows.

In the position adjustment operation, first, the control unit 22 acquires a misalignment amount of the receiving hole 54 and the positioning pin 50 with high accuracy by setting a state in which there is no backlash on the forward direction side between the second gear 30 on the motor 20 side and the first gear 40 on the transfer plate 6 side. The state in which there is no backlash on the forward direction side is a state in which the second gear 30 presses the first gear 40 or a state in which the first gear 40 presses the second gear 30. Then, the control unit 22 corrects the movement amount of the transfer plate 6 based on the acquired misalignment amount such that the misalignment of the receiving hole 54 and the positioning pin 50 falls within the dimensional tolerance. As a result, when the transfer plate 6 comes to the stop position next time or later, the misalignment of the receiving hole 54 and the positioning pin 50 decreases, and the positioning pin 50 does not interfere with the transfer plate 6.

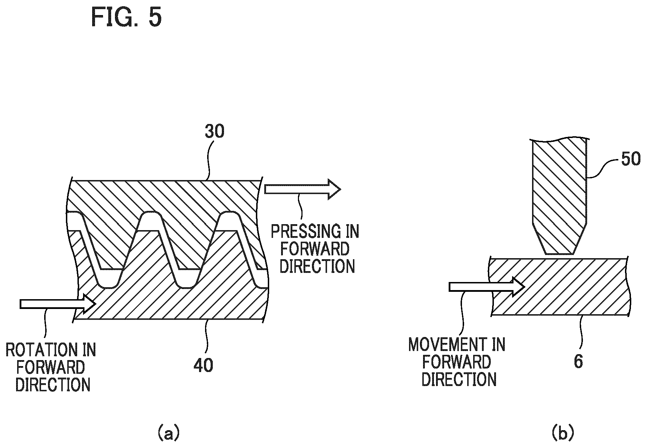

Hereinafter, the position adjustment operation of the receiving hole 54 and the positioning pin 50 will be described in detail with reference to the drawings. Fig. 5(a) is a diagram illustrating a positional relationship between the second gear 30 and the first gear 40 during the movement of the transfer plate 6, and Fig. 5(b) is a diagram illustrating a state of the positioning pin 50 in Fig. 5(a).

When the transfer plate 6 moves, the positioning pin 50 is retreated from the transfer plate 6 as illustrated in Fig. 5(b). As illustrated in Fig. 5(a), the second gear 30 on the motor 20 side presses the first gear 40 on the transfer plate 6 side in the forward direction. As a result, the first gear 40 meshes with the second gear 30, and the power of the motor 20 is transmitted to the transfer plate 6, so that the transfer plate 6 moves in the forward direction.

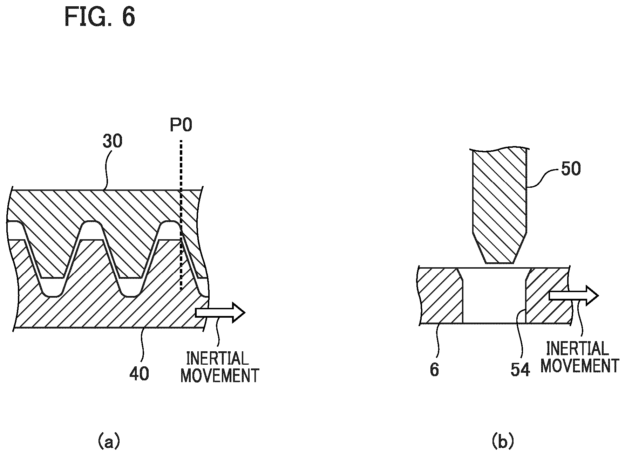

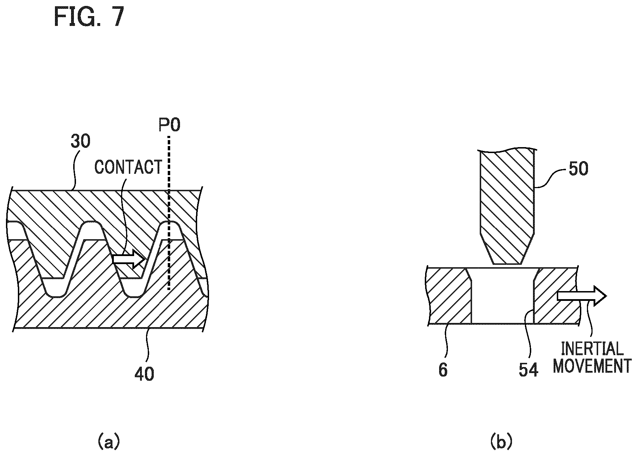

Fig. 6(a) is a diagram illustrating a positional relationship between the second gear 30 and the first gear 40 when the control unit 22 instructs to stop the motor 20, and Figs. 7(a), 8(a), and 9(a) are subsequent diagrams thereof. Figs. 6(b), 7(b), 8(b), and 9(b) are diagrams illustrating states of the positioning pin in Figs. 6(a), 7(a), 8(a), and 9(a), respectively.

At the stop position of the transfer plate 6, as illustrated in Fig. 6(b), the receiving hole 54 of the transfer plate 6 is located below the positioning pin 50. When the control unit 22 issues an instruction to stop the motor 20 at a stop command position P0, as illustrated in Fig. 6(a), the second gear 30 fixed to the rotation shaft A of the motor 20 stops, while the first gear 40 on the transfer plate 6 side rotates in the forward direction by the inertial force acting on the transfer plate 6.

When the first gear 40 on the transfer plate 6 side rotates in the forward direction by the inertial force, the first gear 40 is in contact with the stopped second gear 30 as illustrated in Fig. 7(a). Then, the second gear 30 becomes a resistor and the first gear 40 eventually stops, but the second gear 30 receiving the first gear 40 rotates in the forward direction from the stop command position P0. In the state of Fig. 7(a), due to the inertial movement of the transfer plate 6, as illustrated in Fig. 7(b), the position of the receiving hole 54 of the transfer plate 6 is shifted in the forward direction as compared with Fig. 6(b).

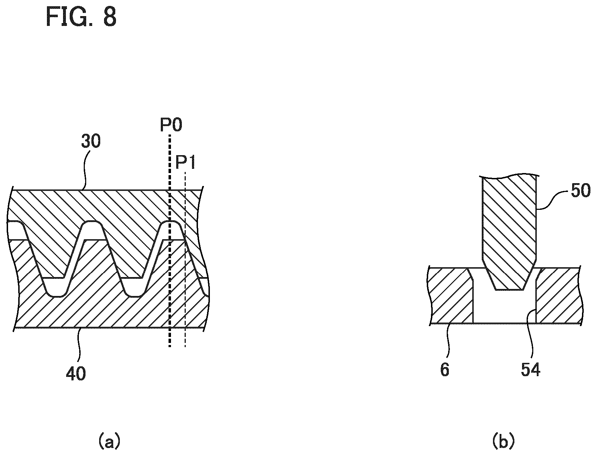

Figs. 8(a) and 8(b) illustrate a state of when the positioning pin 50 is lowered. Fig. 8(a) illustrates the stop command position P0 of the motor and a stop position P1 after the inertial movement. Fig. 8(a) corresponds to a state in which the first gear 40 pushes the second gear 30 and there is no backlash on the forward direction side. Therefore, the control unit 22 can detect the stop position P1 after the inertial movement from the encoder of the motor 20. The stop position P1 after the inertial movement is an example of a first stop position.

After the inertial movement of the transfer plate 6 is stopped, the control unit 22 issues an instruction to lower the positioning pin 50. Then, as illustrated in Fig. 8(b), the positioning pin 50 is lowered from the state of Fig. 7(b) by the driving of the air cylinder 52.

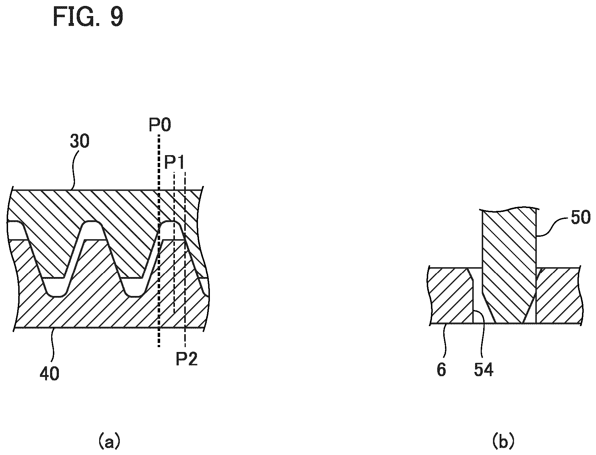

Figs. 9(a) and 9(b) illustrate a state in which the positioning pin 50 is inserted into the receiving hole 54 of the transfer plate 6. In Figs. 9(a) and 9(b), it is assumed that the transfer plate 6 is at a position where the transfer plate 6 interferes with the positioning pin 50, and the transfer plate 6 moves in the forward direction.

When the positioning pin 50 is inserted into the receiving hole 54 in a state where the transfer plate 6 interferes with the positioning pin 50, as illustrated in Fig. 9(b), the transfer plate 6 is pushed by the positioning pin 50 at the time of insertion, and the transfer plate 6 further moves in the forward direction. Then, the first gear 40 on the transfer plate 6 side pushes the second gear 30 on the motor 20 side in the forward direction, and the second gear 30 rotates from the stop position P1 after the inertial movement to a final stop position P2. Fig. 9(a) corresponds to a state in which the first gear 40 pushes the second gear 30 and there is no backlash on the forward direction side. Therefore, the control unit 22 can detect the final stop position P2 from the encoder of the motor 20. The final stop position P2 is an example of a second stop position.

In order to avoid interference between the transfer plate 6 and the positioning pin 50, the stop position P1 after the inertial movement of the second gear 30 may be matched with the final stop position P2. Therefore, the control unit 22 calculates a correction value obtained by subtracting the stop position P1 after the inertial movement from the final stop position P2 from the movement amount of the transfer plate 6, and corrects the movement amount applied in the next movement of the transfer plate 6 (adds a value based on the correction value (P2 - P1) to a command value of the next stop command position P0). As a result, in the next movement of the transfer plate 6, the stop position P1 after the inertial movement of the second gear 30 is matched with the final stop position P2, and the receiving hole 54 is at the position of the positioning pin 50, so that the positioning pin 50 does not interfere with the transfer plate 6.

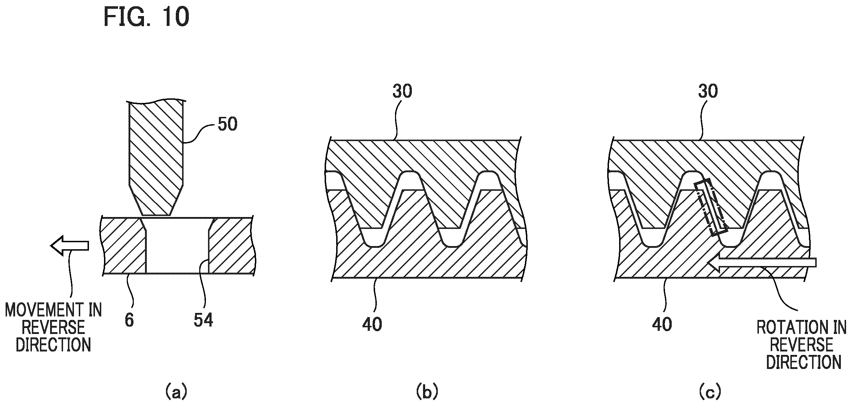

Here, in the above example, the case where the transfer plate 6 moves in the forward direction when the transfer plate 6 interferes with the positioning pin 50 has been described. However, as illustrated in Fig. 10(a), when the transfer plate 6 interferes with the positioning pin 50, the transfer plate 6 may move in the reverse direction.

Even when the transfer plate 6 moves in the reverse direction, the first gear 40 pushes the second gear 30 due to the inertial movement of the transfer plate 6 before the positioning pin 50 is lowered (see Fig. 10(b)). However, when the positioning pin 50 is lowered, the transfer plate 6 moves in the reverse direction, whereby the first gear 40 is separated from the second gear 30 as surrounded by a one-dot chain line in Fig. 10(c). In the state of Fig. 10(c), since the difference (movement amount) between the stop position P1 after the inertial movement and the final stop position P2 is absorbed by the backlash on the reverse direction side (since the difference falls within the distance/clearance of the backlash on the reverse direction side), the shift of the transfer plate 6 cannot be correctly acquired by the encoder of the motor 20.

As a countermeasure against the above, the control unit 22 of the present embodiment executes the following abutting stop operation and determines a direction in which the transfer plate 6 has moved by the insertion of the positioning pin 50.

After the positioning pin 50 is inserted and the transfer plate 6 is restrained, the control unit 22 rotates the motor 20 in the forward direction with a low torque to such an extent that the transfer plate 6 does not move. Then, the control unit 22 stops the rotation of the motor 20 when the second gear 30 hits the first gear 40. For example, when a difference between a command rotation speed of the motor 20 and an actual rotation speed acquired by the encoder is a predetermined value or more (that is, when the load of the motor 20 increases), the control unit 22 determines that the second gear 30 hits the first gear 40. The control unit 22 sets a gap G (clearance or distance) formed between two gears on the non-contact side in a state in which the first gear 40 and the second gear 30 are in contact with each other, or a maximum allowable numerical value of the gap G as a threshold value.

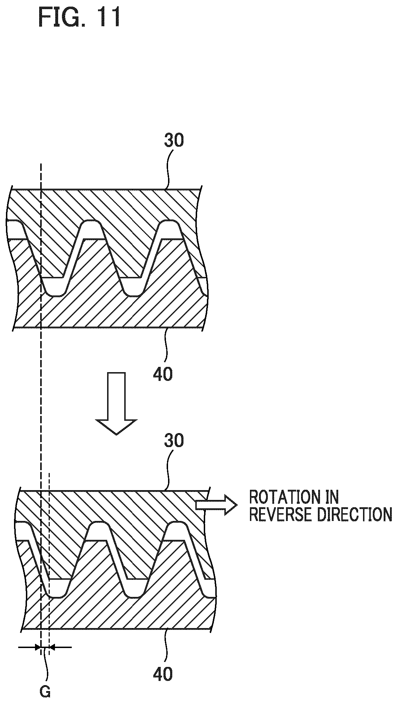

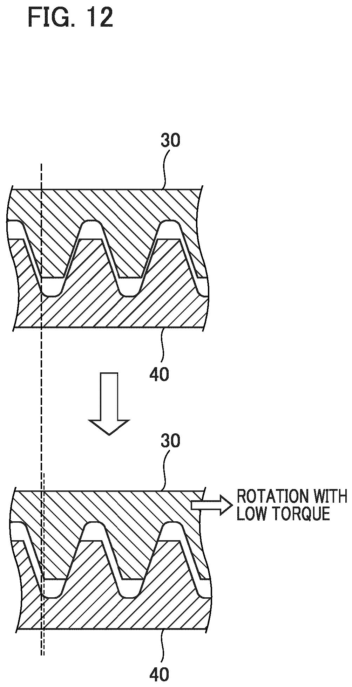

Figs. 11 and 12 are diagrams illustrating an example of determination of the movement direction of the transfer plate 6 by the abutting stop operation. Fig. 11 illustrates a case where the transfer plate 6 moves in the forward direction by the insertion of the positioning pin 50, and Fig. 12 illustrates a case where the transfer plate 6 moves in the reverse direction by the insertion of the positioning pin 50.

As illustrated in Fig. 11, when the transfer plate 6 moves in the forward direction by the insertion of the positioning pin 50, the first gear 40 on the transfer plate 6 side pushes the second gear 30 in the forward direction. That is, in the example of Fig. 11, as illustrated in the upper diagram, the gap G is formed between the second gear 30 and the first gear 40 on the forward side of the second gear 30. Therefore, in a case where the motor 20 is rotated in the forward direction with a low torque, the load of the motor 20 is small in a section of the gap G, but the load of the motor 20 increases when the second gear 30 pushes the first gear 40 as illustrated in the lower diagram of Fig. 11. In addition, it can be detected that the second gear 30 has moved in the forward direction by the same distance as the gap G, by the abutting stop operation. As a result, the control unit 22 can determine that the transfer plate 6 has moved in the forward direction (advancing direction) by the insertion of the positioning pin 50, and the shift of the transfer plate 6 has been correctly acquired by the encoder of the motor 20.

On the other hand, as illustrated in Fig. 12, when the transfer plate 6 moves in the reverse direction by the insertion of the positioning pin 50, the first gear 40 on the transfer plate 6 side pushes the second gear 30 in the reverse direction. That is, in the example of Fig. 12, as illustrated in the upper diagram, there is almost no gap between the second gear 30 and the first gear 40 on the forward side of the second gear 30. Therefore, as illustrated in the lower diagram of Fig. 12, when the motor 20 is rotated in the forward direction with a low torque, the load of the motor 20 indicates a high value from the beginning because the second gear 30 is in a state of pushing the first gear 40. In addition, it can be detected that the second gear 30 has moved in the forward direction by a distance smaller than the gap G (for example, 1/2 of the gap G), by the abutting stop operation. As a result, the control unit 22 can determine that the transfer plate 6 has moved in the reverse direction (backward direction) by the insertion of the positioning pin 50, and the shift of the transfer plate 6 has not been correctly acquired by the encoder of the motor 20.

Therefore, when the gap G is detected during the abutting stop operation as illustrated in Fig. 11 (when the load of the motor 20 increases from the middle), the control unit 22 determines that the transfer plate 6 has moved in the forward direction by the insertion of the positioning pin 50. In this case, the control unit 22 may calculate a correction value obtained by subtracting the stop position P1 after the inertial movement from the final stop position P2 from the movement amount of the transfer plate 6 and correct the movement amount to be applied in the next movement of the transfer plate 6.

On the other hand, when the gap G cannot be detected during the abutting stop operation as illustrated in Fig. 12 (when the load of the motor 20 is large from the beginning), the control unit 22 determines that the transfer plate 6 has moved in the reverse direction by the insertion of the positioning pin 50.

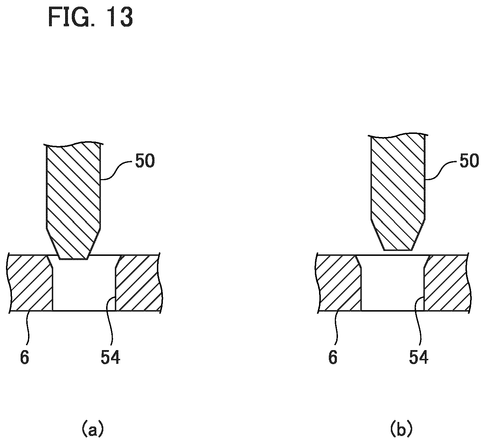

In this case, regardless of the difference between P2 and P1, the control unit 22 executes calibration processing of shifting the movement amount of the transfer plate 6 in the reverse direction by a predetermined amount (for example, a value of about the radius of the positioning pin). Fig. 13(a) illustrates a positional relationship between the positioning pin 50 and the receiving hole 54 before the calibration processing, and Fig. 13(b) illustrates a positional relationship between the positioning pin 50 and the receiving hole 54 after the calibration processing. With the above calibration processing, when the transfer plate 6 comes to the stop position next time or later, the misalignment of the receiving hole 54 and the positioning pin 50 occurs in the forward direction. Therefore, in the next and subsequent position adjustment operations, the control unit 22 can appropriately correct the positional relationship between the positioning pin 50 and the receiving hole 54.

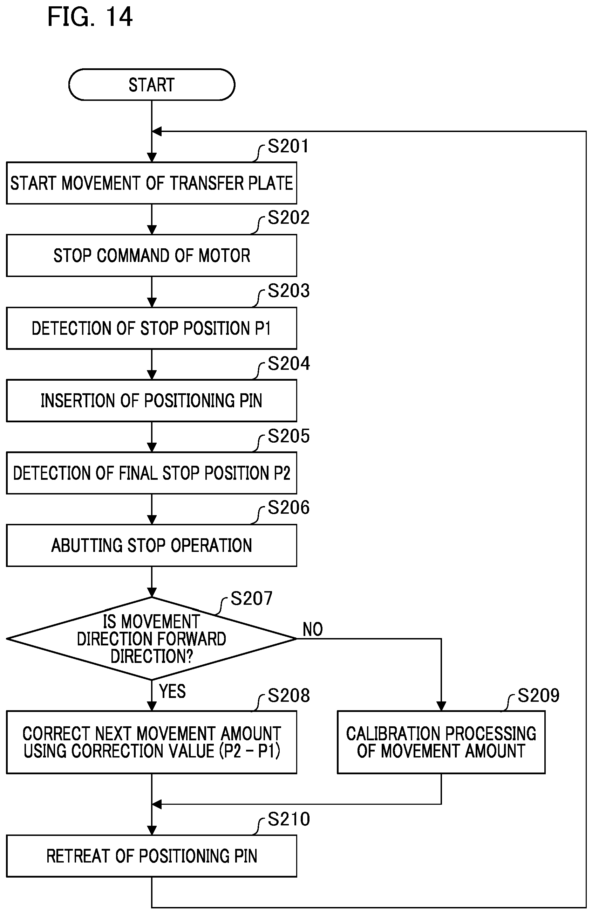

Fig. 14 is a flowchart illustrating a control example of the conveyance operation of the transfer plate 6. The control of the conveyance operation including the position adjustment operation is realized by the CPU 61 executing a program loaded from the storage unit 63 to the RAM 62 in the control unit 22. Note that the program is not limited to being implemented at the time of device shipment, and may be provided to an existing device by update or the like.

In step S201, the control unit 22 instructs the motor 20 to move the transfer plate 6 by a predetermined movement amount in the forward direction.

In step S202, when the transfer plate 6 moves to the stop position, the control unit 22 issues a stop command to the motor 20. The position at this time corresponds to the stop command position P0.

In step S203, the control unit 22 detects the stop position P1 after the inertial movement from the encoder of the motor 20.

In step S204, after the transfer plate 6 is stopped, the control unit 22 lowers the positioning pin 50 by driving the air cylinder 52. As a result, the positioning pin 50 is inserted into the receiving hole 54 of the transfer plate 6.

In step S205, after the positioning pin 50 is inserted, the control unit 22 detects the final stop position P2 from the encoder of the motor 20.

In step S206, after insertion of the positioning pin 50, the control unit 22 executes the abutting stop operation of rotating the motor 20 in the forward direction with a low torque to such an extent that the transfer plate 6 does not move. Then, the control unit 22 detects the movement direction of the transfer plate 6 according to the insertion of the positioning pin 50 from the load of the motor 20 or the encoder of the motor 20.

In step S207, the control unit 22 determines whether or not the movement direction of the transfer plate 6 according to the insertion of the positioning pin 50 is the forward direction. When the movement direction is the forward direction (YES), the process proceeds to S208. On the other hand, when the movement direction is the reverse direction (NO), the process proceeds to S209.

In step S208, the control unit 22 calculates a correction value obtained by subtracting the stop position P1 after the inertial movement from the final stop position P2 from the movement amount of the transfer plate 6, and corrects the movement amount to be applied in the next movement of the transfer plate 6. Then, the process proceeds to S210.

In step S209, the control unit 22 executes calibration processing of shifting the movement amount of the transfer plate 6 by a predetermined amount in the reverse direction. Then, the process proceeds to S210.

In step S210, the control unit 22 raises the positioning pin 50 by driving the air cylinder 52 and retreats it from the receiving hole 54 of the transfer plate 6. As a result, the engagement between the receiving hole 54 and the positioning pin 50 is released, and the transfer plate 6 can be moved in the forward direction again. Then, the process returns to S201, and the control unit 22 repeats the above operation. This is the end of the description of Fig. 14.

Hereinafter, functions and effects of the present embodiment will be described.

The blow molding apparatus 1 of the present embodiment includes the transfer plate 6 that rotationally conveys a preform between a plurality of stations by moving in a rotation direction, the positioning pin 50 that engages with the transfer plate 6 at a stop position corresponding to the station and restrains the transfer plate 6 in a horizontal direction, the motor 20 that drives the transfer plate 6 in the rotation direction, the first gear 40 and the second gear 30 that transmit power of the motor 20 to the transfer plate 6, and the control unit 22 that controls the positioning pin 50 and the motor 20. The control unit 22 detects the first stop position (P1) of the transfer plate 6 stopped by the control of the motor 20 and the second stop position (P2) of the transfer plate 6 after the positioning pin 50 engages with the transfer plate 6, and corrects a next movement amount of the transfer plate 6 based on a difference between the second stop position and the first stop position.

According to the present embodiment, since the control unit 22 automatically corrects the next movement amount of the transfer plate 6 using the detected second stop position and first stop position, the position adjustment of the receiving hole 54 of the transfer plate 6 and the positioning pin 50 can be easily performed with high accuracy without depending on the worker. As a result, abrasion of the receiving hole 54 due to interference between the transfer plate 6 and the positioning pin 50 is suppressed, the frequency of replacement or repair of the transfer plate 6 is reduced, and generation of abrasion powder can also be suppressed.

Further, according to the present embodiment, the position adjustment of the receiving hole 54 of the transfer plate 6 and the positioning pin 50 is automatically performed. Therefore, when the product to be processed (molded) is switched, the setting of the processing condition (molding condition) is changed, the mold (the neck mold 18, the holding plate 8, and the like) to be installed in the transfer plate 6 is replaced, or the like, the position adjustment work of the receiving hole 54 and the positioning pin 50 by the worker is reduced. Therefore, the operation cost of the device can be reduced.

The present invention is not limited to the above embodiment, and various improvements and design changes may be made without departing from the gist of the present invention.

In the position adjustment operation of the above embodiment, an example has been described in which the movement speed of the transfer plate is relatively high, and the backlash of the gear occurs in the reverse direction when the transfer plate 6 is stopped. However, when the movement speed of the transfer plate is relatively low, the inertial force acting on the transfer plate becomes small, so that the stop command position P0 of the motor and the stop position P1 after the inertial movement hardly change. Therefore, when the movement speed of the transfer plate is relatively low, the control unit may execute the above position adjustment operation by regarding the stop command position P0 of the motor as the stop position P1 after the inertial movement. In this case, the stop command position P0 is an example of the first stop position.

In the above embodiment, the example in which the rotary conveyance device is mounted on the blow molding apparatus 1 has been described, but the rotary conveyance device of the present invention can be mounted on any other processing apparatus.

As an example, the rotary conveyance device of the present invention may be mounted on an injection molding apparatus (for example, an injection molding apparatus disclosed in JP 03-140219 A) including an injection molding unit that injects a resin product such as a preform, a post-cooling unit that accommodates the injection-molded resin product in a cooling mold and cools the resin product, and a taking-out unit that takes-out the cooled product. In the above case, the arrangement angle of each station and the rotation amount of the transfer plate are 120 degrees.

In the above embodiment, the example in which the rotary conveyance device is mounted on the blow molding apparatus including the four stations has been described, but the configuration of the blow molding apparatus is not limited to the above embodiment. For example, the blow molding apparatus may sequentially include five stations of a first injection molding unit, a second injection molding unit, a temperature adjustment unit, a blow molding unit, and a taking-out unit, and form a multilayered preform to manufacture a multilayered container. In this case, the arrangement angle of each station and the rotation amount of the transfer plate are 72 degrees. As a modification of the above, the blow molding apparatus may include six stations of a first injection molding unit, a first temperature adjustment unit, a second injection molding unit, a second temperature adjustment unit, a blow molding unit, and a taking-out unit. In this case, the arrangement angle of each station and the rotation amount of the transfer plate are 60 degrees.

Further, the blow molding apparatus or the injection molding apparatus on which the rotary conveyance device is mounted may have any overall structure as long as the blow molding apparatus and the injection molding apparatus have a mechanism that holds a workpiece (preform or the like) by a mold member (neck mold or the like) provided on a transfer plate and conveys the workpiece to the downstream side (downstream process or molding station) by intermittent rotation of the transfer plate. For example, the number of stations of the blow molding apparatus or the injection molding apparatus may be two (for example, the injection molding unit and the taking-out unit) or three (for example, the injection molding unit, the blow molding unit, and the taking-out unit).

In the above embodiment, the control unit may be configured by hardware (for example, ASIC or the like) that realizes the function of the program.

In addition, the embodiments disclosed herein are to be considered in all respects as illustrative and not restrictive. The scope of the present invention is indicated not by the above description but by the claims, and it is intended that meanings equivalent to the claims and all modifications within the scope are included.

### Reference Signs List

- 1: blow molding apparatus
- 4: upper base
- 6: transfer plate
- 10: injection molding unit
- 12: temperature adjustment unit
- 14: blow molding unit
- 16: taking-out unit
- 20: motor
- 22: control unit
- 30: second gear
- 40: first gear
- 50: positioning pin
- 52: air cylinder
- 54: receiving hole

## Claims

1. A rotary conveyance device comprising:
a conveyance body that rotationally conveys a workpiece between a plurality of stations by moving in a rotation direction;
a positioning unit that engages with the conveyance body at a stop position corresponding to the station and restrains the conveyance body in a horizontal direction;
a motor that drives the conveyance body in the rotation direction;
a drive mechanism that transmits power of the motor to the conveyance body; and
a control unit that controls the positioning unit and the motor, wherein
the control unit detects a first stop position of the conveyance body stopped by the control of the motor and a second stop position of the conveyance body after the positioning unit engages with the conveyance body, and corrects a next movement amount of the conveyance body based on a difference between the second stop position and the first stop position.

2. The rotary conveyance device according to claim 1, wherein
the control unit detects, as the first stop position, a position where the conveyance body moves by inertia and then stops after the motor stops rotating.

3. The rotary conveyance device according to claim 2, wherein
the control unit detects the first stop position and the second stop position based on a rotation amount of the motor.

4. The rotary conveyance device according to claim 2, wherein
the control unit detects a gap of a gear of the drive mechanism by driving the motor in a conveyance direction with a torque at which the conveyance body to be restrained does not move after detecting the second stop position, and
the control unit determines a shift direction of the conveyance body when the positioning unit engages with the conveyance body based on a size of the gap.

5. The rotary conveyance device according to claim 4, wherein
when the shift direction of the conveyance body is a direction opposite to a conveyance direction of the workpiece, the control unit executes processing of shifting the movement amount of the conveyance body by a predetermined amount in the direction opposite to the conveyance direction regardless of the difference.

6. A method for controlling a rotary conveyance device, which includes a conveyance body that rotationally conveys a workpiece between a plurality of stations by moving in a rotation direction,
a positioning unit that engages with the conveyance body at a stop position corresponding to the station and restrains the conveyance body in a horizontal direction,
a motor that drives the conveyance body in the rotation direction, and
a drive mechanism that transmits power of the motor to the conveyance body, the method comprising:
a step of detecting a first stop position of the conveyance body stopped by the control of the motor;
a step of detecting a second stop position of the conveyance body after the positioning unit engages with the conveyance body; and
a step of correcting a next movement amount of the conveyance body based on a difference between the second stop position and the first stop position.

7. A program for causing a computer of a rotary conveyance device, which includes a conveyance body that rotationally conveys a workpiece between a plurality of stations by moving in a rotation direction,
a positioning unit that engages with the conveyance body at a stop position corresponding to the station and restrains the conveyance body in a horizontal direction,
a motor that drives the conveyance body in the rotation direction, and
a drive mechanism that transmits power of the motor to the conveyance body, to execute:
a step of detecting a first stop position of the conveyance body stopped by the control of the motor;
a step of detecting a second stop position of the conveyance body after the positioning unit engages with the conveyance body; and
a step of correcting a next movement amount of the conveyance body based on a difference between the second stop position and the first stop position.
